(19) **Europäisches Patentamt / European Patent Office / Office européen des brevets**

(11) **EP 1 672 845 B1**

(12) **EUROPEAN PATENT SPECIFICATION**

(45) Date of publication and mention
of the grant of the patent:
**31.10.2007 Bulletin 2007/44**

(51) Int Cl.:
*H04L 12/28* (2006.01)    *H04L 12/56* (2006.01)
*H04Q 7/30* (2006.01)

(21) Application number: **05112221.6**

(22) Date of filing: **15.12.2005**

(54) **Wireless base station device and rate control method thereof**

Drahtlose Basisstation und Verfahren zur Einstellung der Übertragungsrate

Station de base sans fil et méthode pour contrôler la vitesse de transmission

(84) Designated Contracting States:
**DE FI GB SE**

(30) Priority: **15.12.2004 JP 2004363082**

(43) Date of publication of application:
**21.06.2006 Bulletin 2006/25**

(73) Proprietor: **NEC CORPORATION**
**Tokyo (JP)**

(72) Inventor: **Nakayasu, Kanada**
**Tokyo (JP)**

(74) Representative: **Betten & Resch**
**Patentanwälte,**
**Theatinerstrasse 8**
**80333 München (DE)**

(56) References cited:
**EP-A- 1 331 768**        **WO-A-20/04002085**
**US-A1- 2004 193 719**

**Description**

FIELD OF THE INVENTION

The present invention relates to a wireless base station device and its rate control method, and more particularly to a wireless base station device that processes high peak-throughput, high-burstiness data and to a data flow rate control method used in the wireless base station device.

BACKGROUND OF THE INVENTION

Recently, the size of contents available for a mobile phone becomes larger and larger. In future, there will be a rapidly increasing need for the high-speed transmission of large contents such as those used in moving-picture delivery. To meet the need for such a high-speed data communication, there is a best effort packet data communication method called High Speed Downlink Packet Access (HSDPA). This method employs the adaptive modulation/coding scheme and the packet combination hybrid ARQ (Automatic Repeat Request) to increase the speed, and improve the quality, of data communication.

Such a best effort packet data communication method is required to process high peak-throughput, high-burstiness data in many cases. In a wireless communication system where the flow of user data is multiplexed on a wired line between a wireless base station device and a higher-level wireless base station device, the peak throughput and burstiness of data are increased. To solve this problem, a sufficient bandwidth is allocated to the wired line to avoid congestion.

On the other hand, a method is disclosed in Patent Document 1 as a related technology. This method dynamically adjusts the bandwidth/power level, allocated to a given data service in a wireless communication system, to the actual data rate required by a source. According to this method, when the amount of data in the sending or receiving buffer exceeds a predetermined threshold, an auxiliary data channel is used to set a high data rate to allow a base station to manage the data buffer within a specified threshold.

Patent Document 2 discloses a packet transfer rate control method for equally allocating the bandwidth among the Internet users. This method estimates the number of user data flows of each class from the traffic measurement values and checks if the link is the bottleneck of each user flow. Based on the checking result, each node dynamically changes the weight of the class buffer to control the packet transfer rate of the users.

[Patent Document 1] Japanese Patent Kokai Publication No. JP-P2000-316035A
[Patent Document 2] Japanese Patent Kokai Publication No. JP-P2002-57707A

SUMMARY OF THE DISCLOSURE

One of data processed by the HSDPA-based bearer service is non-realtime data such as that used in the best effort service. In the HSDPA-based best effort service, it is expected that the peak throughput and the burstiness become extremely high. In this case, the utilization of a wired line between the wireless base station controller and the wireless base station device is decreased and, therefore, a wider bandwidth wired line is necessary.

That is, in an HSDPA wireless base station device where the same spread encoder is time-shared by multiple users to increase the utilization of a wireless resource for higher throughput of user data, one of the problems is that the bandwidth cost of the wired line between a wireless base station and a wireless base station controller is increased to meet the increased throughput of the wireless line.

It is an object of the present invention, when high peak-throughput, high burstiness data is processed by a data communication method such as HSDPA, to increase the utilization of a wired line and to minimize the wired line cost that is increased by the introduction of HSDPA.

European Patent Application No. 1331768 A1 provides a rate control system and method for a link within a wireless communications system between a first and a second node, where at least one user is provided a rate over the link as a function of the link load. This user rate is set to a reduced rate on the link as a function of the rates of a plurality of users on the link. The size of transport format blocks used to transport user data is selected as a function of the total user data to be transported over the link during a transmission interval.

United States Patent Application US 2004/0193719 A1 describes a flow control method, wherein a flow control message, requesting more data, is sent from a first communication device based on an amount of data output by the first communication device and an available data storage capacity of the first communication device.

To solve the problems described above, the present invention provides the following. In one aspect, the present invention provides a rate control method, for use in a wireless base station device when congestion occurs in data flows from a higher-level station device, for setting rates of the data flows to a rate lower than a predetermined bandwidth. In this method, each of the data flows is managed and, based on a holding amount of data that is held in a buffer in the higher-level station device and that corresponds to the each data flow, a notification is sent to the higher-level station device to request that the rates be reduced in descending order of rates beginning with a data flow with a highest rate.

In another aspect, the present invention provides a rate control method, for use in a wireless base station device when congestion occurs in a virtual link to which data flows belong, for setting rates of the data flows to a rate lower than a predetermined bandwidth. This method comprises the steps of (a) calculating a data flow rate $R_{flow\_reduced}$ (n) using $R_{flow\_reduced}(n)=N_{flow}(n)/T_{MAX\_flow}$ where $N_{flow}(n)$ is a holding amount of data that is held in a buffer in a higher-level station device and that corresponds to an nth (n is a natural number) data flow and $T_{MAX\_flow}$ is a maximum holding time allowed in the buffer; (b) calculating a bandwidth reduction rate $R_{VL\_reduced}(n) = (R_{flow}(n)-R_{flow-reduced}(n))/R_{vlink}$ (where $R_{vlink}$ is a maximum bandwidth of the virtual link) of the nth data flow; and (c) if the bandwidth reduction rate $R_{VL\_reduced}(n)$ is equal to or higher than a predetermined bandwidth reduction rate, sending flow control information to the higher-level station device to request that the rate of the nth data flow be set to $R_{flow\_reduced}(n)$.

In still another aspect, the present invention provides a wireless base station device connected to a higher-level station device and comprising baseband processors, one for each virtual link to which one or more data flows belong. Each of the baseband processors comprises a congestion monitor that monitors a reception bandwidth usage rate of a virtual link, allocated to a cell, to detect congestion and, if congestion is detected, notifies congestion information to a flow controller; a traffic distributor that distributes user traffic, received from said higher-level station device, to a traffic flow of each user and, at the same time, extracts a holding amount of a buffer in said higher-level station device for each data flow and notifies the extracted holding amount to the flow controller; and the flow controller that manages a data flow of each user and, if the congestion information is notified by said congestion monitor, requests said higher-level station device to reduce rates of data flows in descending order of rates beginning with a data flow with a highest rate.

The meritorious effects of the present invention are summarized as follows.

According to the present invention, a wireless base station device controls the data flow amount of each user considering the data holding amount in a higher-level station device (wireless base station controller) when congestion is detected. This allows the bandwidth of a wired line to be efficiently controlled between the wireless base station and the wireless base station controller while minimizing the occurrence of a buffer overflow in the wireless base station controller when congestion occurs. Therefore, the bandwidth cost of the wired line can be reduced.

BRIEF DESCRIPTION OF THE DRAWINGS

FIG. 1 is a block diagram showing the configuration of the connection between a wireless base station device in a first embodiment of the present invention and a wireless base station controller.

FIG. 2 is a block diagram showing the configuration of a baseband processor.

FIG. 3 is a flowchart showing the operation of the baseband processor in the first embodiment of the present invention.

FIG. 4 is a flowchart showing the operation of the baseband processor in a second embodiment of the present invention.

PREFERRED EMBODIMENTS OF THE INVENTION

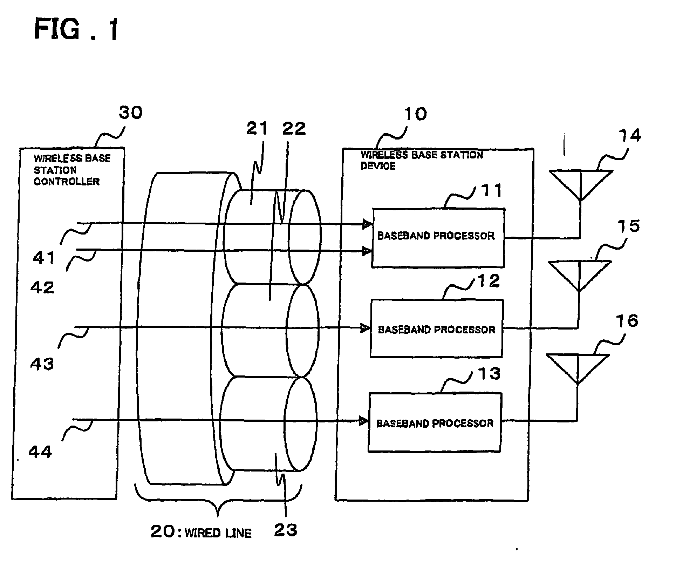

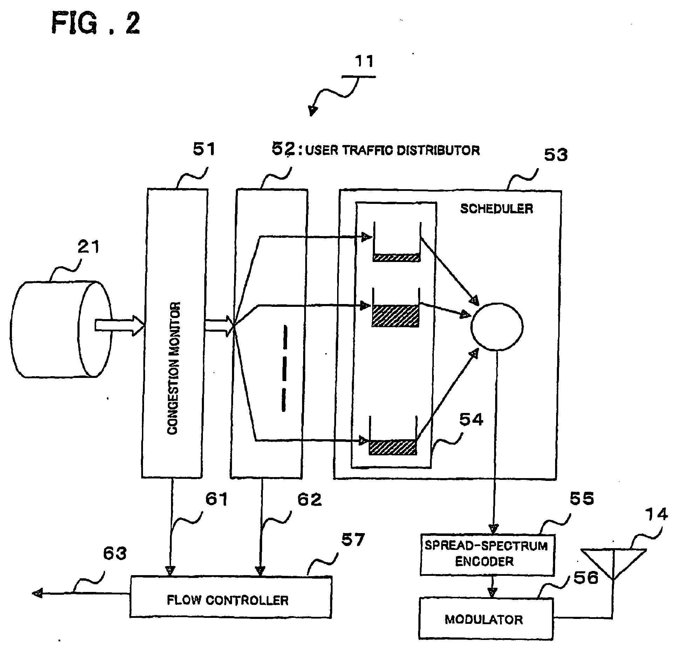

A wireless base station device (10 in FIG. 1) in a preferred embodiment of the present invention, connected to a wireless base station controller (30 in FIG. 1), comprises baseband processors (11, 12, and 13 in FIG. 1) for virtual links (21, 22, and 23 in FIG. 1) to which user data flows (41, 42, 43, and 44 in FIG. 1) belong, one baseband processor for each virtual link. A baseband processor (11 in FIG. 2) comprises a congestion monitor (51 in FIG. 2), a traffic distributor (52 in FIG. 2), and a flow controller (57 in FIG. 2). The congestion monitor monitors the reception bandwidth usage rate of a virtual link allocated to each cell to detect congestion and, when it finds congestion, notifies congestion information to the flow controller. The traffic distributor distributes the user traffic, which is received from the wireless base station controller, into the traffic flow of each user and, at the same time, extracts, for each user data flow, the buffer holding amount in the wireless base station controller where user data flows are multiplexed and notifies the extracted holding amount to the flow controller. The flow controller manages the data flow of each user and, in response to a congestion notification from the congestion monitor, requests the wireless base station controller to reduce the rate of a user data flow in descending order of rates beginning with a data flow with a highest rate.

The wireless base station device with the configuration described above monitors congestion and, when congestion is detected, controls the data flow mount of each user considering the data holding amount in the wireless base station controller. This control method efficiently controls a data flow that would otherwise increase the load of the bandwidth and, therefore, efficiently processes a high-burstiness data flow. In addition, because a flow is controlled according to the data amount, the bandwidth of a wired line can be controlled efficiently while minimizing the occurrence of a buffer overflow in the wireless base station controller when congestion occurs. Therefore, the bandwidth can be controller efficiently and the bandwidth cost of a wired line can be reduced by the instruction of HSDPA. The following describes embodiments more in detail.

[First embodiment]

FIG. 1 is a block diagram showing the configuration of the connection between a wireless base station device in a first embodiment of the present invention and a wireless base station controller. Referring to FIG. 1, a wireless base station device 10 comprises baseband processors 11, 12, and 13 each of which has an antenna 14, 15, or 16, respectively. The wireless base station device 10 is connected to a wireless base station controller 30 via a wired line 20. In the description below, the wireless base station device 10 covers three cells (cells #1, #2, and #3) and has baseband processors 11, 12, and 13, one for each cell. Note that the number of cells is not limited to three.

Each of the baseband processors 11, 12, and 13 once stores a user traffic from the wireless base station controller 30 into the buffer, performs spread spectrum modulation according to the data traffic priority among the users in the same cell, and sends the modulated data to wireless lines via the antenna 14, 15, or 16.

The wired line 20 comprises virtual links 21, 22, and 23 each of which corresponds to one of the cells. The bandwidth of each virtual link is limited to a predetermined value.

The wireless base station controller 30 sends a user data flow, received from a higher-level device such as a mobile communication exchange not shown, to the wireless base station device 10 via the virtual link corresponding to the cell where the user belongs. In FIG. 1, it is assumed that a user data flow 41 and a user data flow 42 correspond to cell #1, a user data flow 43 corresponds to cell #2, and a user data flow 44 corresponds to cell #3. It is also assumed that each user data flow has a data holding amount indication that indicates the amount of data held in the buffer in the wireless base station controller 30.

FIG. 2 is a block diagram showing the configuration of the baseband processor. Because the baseband processors 11, 12, and 13 have the same configuration, the following describes only the baseband processor 11. The baseband processor 11 comprises a congestion monitor 51, a user traffic distributor 52, a scheduler 53, a spread-spectrum encoder 55, a modulator 56, and a flow controller 57. The scheduler 53 also has a buffer 54.

The congestion monitor 51 has the function to constantly monitor the reception bandwidth usage rate of the virtual link 21 allocated to each cell. In addition, the congestion monitor 51 has a function, which is used when it detects congestion, to notify the congestion information to the flow controller 57 using a congestion state notification interface 61.

The user traffic distributor 52 distributes a user traffic, received from the wired line 20, into multiple traffic flows, one for each user, and accumulates the traffic flow in the buffer 54 in the scheduler 53 provided for each user. The accumulated user traffic is selected by the scheduler 53 in a time-dividing manner and is spread-spectrum modulated by the spread-spectrum encoder 55 in order in which the user traffics are selected. After that, the user traffic is modulated by the modulator 56 into a wireless frequency for transmission from the antenna 14 as an electric wave.

The user traffic distributor 52 also has a function to extract, for each user data flow, the holding amount of the buffer in the wireless base station controller 30 where the user data flows are multiplexed and to notify the buffer holding amount to the flow controller 57 via a buffer holding information notification interface 62.

The flow controller 57 receives the congestion state notified by the congestion monitor 51 via the congestion state notification interface 61 and the buffer holding amount notified by the user traffic distributor 52 via the buffer holding information notification interface 62. Based on the congestion state and the buffer holding amount that have been received, the flow controller 57 sends flow control information 63 to the wireless base station controller 30. The flow control information 63 that is sent in this way controls the amount of user data flow sent by the wireless base station controller 30.

The following describes an actual example of the operation of the baseband processor according to the present invention. The congestion monitor 51 in FIG. 2 measures the usage rate of the reception bandwidth for each virtual link at an interval of a predetermined period. For example, when the wired line 20 is an ATM line, the congestion monitor 51 calculates the bandwidth usage rate (Bandwidth usage rate = Number of received ATM cells except idle cells/Maximum number of ATM cells at the maximum rate) for each unit time.

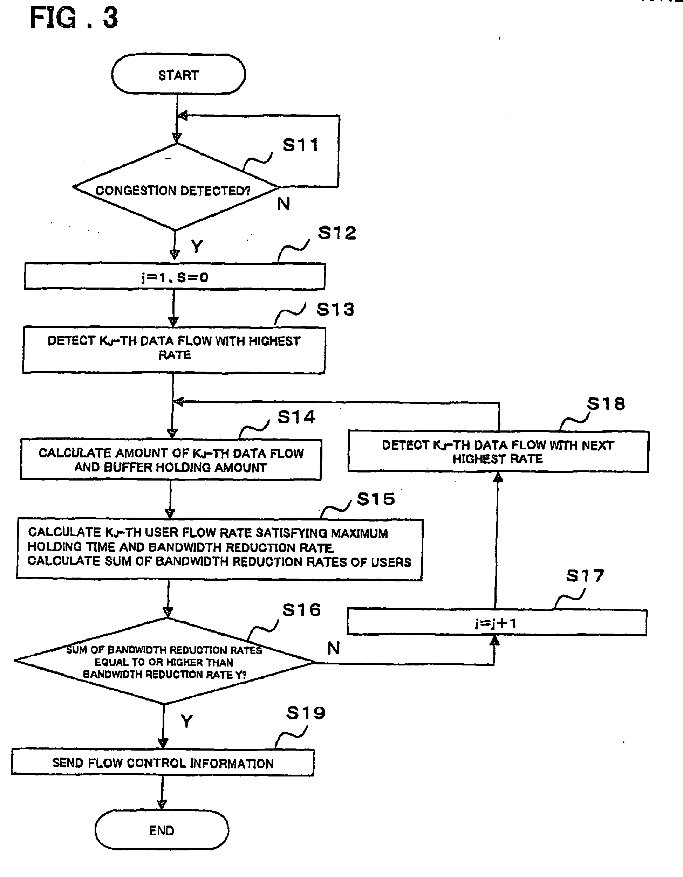

FIG. 3 is a flowchart showing the operation of the baseband processor in the first embodiment of the present invention. In the description below, the rate between the amount of bandwidth to be reduced at congestion detection time and the maximum bandwidth of the virtual link is expressed as the bandwidth reduction rate y. The maximum holding time allowed in the buffer in the wireless base station controller 30 is expressed as the maximum holding time $T_{MAX\_flow}$.

First, in step S11, the congestion monitor 51 checks if congestion is detected. That is, the congestion monitor 51 compares the bandwidth usage rate with the bandwidth usage rate threshold that is specified externally. If the bandwidth usage rate exceeds the threshold, the congestion monitor 51 notifies the congestion information, which indicates that congestion is detected, to the flow controller 57 via the congestion state notification interface 61.

In step S12, the user data flow identification subscript j is set to 1. The sum S of the bandwidth reduction rates calculated for each flow is set to 0.

In step S13, the flow controller 57, which has received a notification from the congestion monitor 51, detects the $k_j$-th user data flow that has the maximum user data rate when the congestion was detected.

In step S14, the flow controller 57 detects the user data flow rate $R_{flow}(k_j)$ and the latest holding (retention) amount $N_{flow}(k_j)$ of data of the $k_j$-th user data flow held in the buffer in the wireless base station controller 30 from the information received from the user traffic distributor 52 via the buffer holding information notification interface 62.

In step S15, the flow controller 57 calculates the user flow rate $R_{flow\_reduced}(k_j)$, which satisfies the maximum holding (retention) time $T_{MAX\_flow}$, using expression (1).

$$R_{flow\_reduced}(k_j) = N_{flow}(k_j)/T_{MAX\_flow} \quad \text{--- Expressoin (1)}$$

The flow controller 57 calculates the bandwidth reduction rate $R_{VL\_reduced}(k_j)$ of the $k_j$-th user from $R_{flow}(k_j)$ using expression (2).

$$R_{VL\_reduced}(k_j) = (R_{flow}(k_j) - R_{flow\_reduced}(k_j))/R_{vlink} \quad \text{--- Expression (2)}$$

where, $R_{vlink}$ is the maximum bandwidth of the virtual link.

In addition, the flow controller 57 calculates the sum S of the bandwidth reduction rates using expression (3).

$$S = S + R_{VL\_reduced}(k_j) \quad \text{--- Expression (3)}$$

In step S16, if the sum S of the bandwidth reduction rates is lower than the bandwidth reduction rate y, control is passed to step S17. If the sum S of the bandwidth reduction rates is the bandwidth reduction rate y or higher, control is passed to step S19.

In step S17, user data flow identification subscript j is incremented by 1.

In step S18, the flow controller 57 detects the $k_j$-th user data flow rate that is the next highest user data rate immediately before detecting congestion. Control is passed back to step S14.

In step S19, the flow controller 57 sends the flow control information 63 to the wireless base station controller 30 to request that the kj-th data flow be set to $R_{flow\_reduced}(k_j)$ for each detected user data flow. That is, if n (n is a natural number) data flows are detected, the flow controller 57 sends information requesting that the $k_j$-th data flow be set to $R_{flow\_reduced}(k_j)$ for j ranging from 1 to n. After that, the sequence of processing is terminated.

As described above, when congestion occurs, the flow controller 57 controls the data flow amount of each user considering the data holding amount in the wireless base station controller. Because the flow amount is controlled according to the data amount, the occurrence of a buffer overflow in the wireless base station controller when congestion occurs can be minimized.

[Second embodiment]

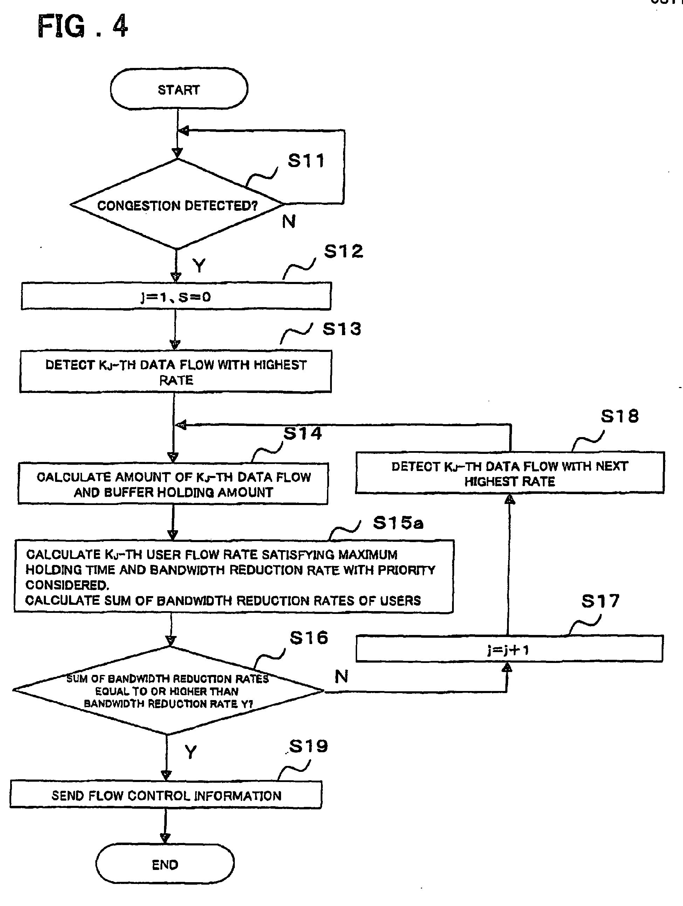

FIG. 4 is a flowchart showing the operation of baseband processor in a second embodiment of the present invention. In FIG. 4, in a step with the same reference numeral as that in FIG. 3, the same operation is performed and therefore the description of that step will be omitted. The processing in FIG. 4 differs from the processing in FIG. 3 in that the traffic amount at congestion occurrence time is controlled considering user's priority. For example, in step S15a, the maximum holding time $T_{MAX\_flow\_Priority}(k_j)$, which is the maximum holding time with priority considered, is used instead of the maximum holding time $T_{MAX\_flow}$.

The maximum holding time $T_{MAX\_flow\_Priority}(k_j)$ with priority considered is generated by correcting the maximum holding time $T_{MAX\_flow}$ as shown in expression (4).

$$T_{MAX\_flow\_Priority}(k_j) = \alpha(P) * T_{MAX\_flow} \quad \text{— Expression (4)}$$

$\alpha(P)$, which is a coefficient determined according to the priority of each user, is the coefficient for a user with priority P. At this time, the relation of the coefficients is $\alpha(1) < \alpha(2) < \alpha(3)$... etc. and the relation of priority is 1>2>3, ...etc.

Correcting the maximum holding time by the priority in this way makes the maximum holding time of a high-priority user apparently short, and the maximum holding time of a low-priority user apparently long. That is, when controlling the data rate of each user upon detecting congestion, the attenuation of the data rate can be decreased for a high-priority user, and can be increased for a low-priority user. This makes the bandwidth control more efficient.

**Claims**

1. A rate control method, performed in a wireless base station device (10) when congestion occurs in data flows from a higher-level station device (30), for setting rates of the data flows to a rate lower than a predetermined bandwidth comprising:

   managing each of the data flows and holding data in a buffer in a higher-level station device (30); and,
   based on a holding amount of data that is held in said buffer and that corresponds to each data flow, sending a notification to said higher-level station device(30) to request to reduce rates in descending order of rates beginning with a data flow with a highest rate-; and,
   data on the holding amount of data that is held in said buffer is extracted from the data flow.

2. The rate control method performed in a wireless base station device (10) as defined by claim 1 wherein the rate of said each data flow is reduced so that the rate becomes equal to a rate determined by a ratio between the holding amount and a maximum holding time allowed in said buffer.

3. The rate control method performed in a wireless base station device (10) as defined by claim 2 wherein priority is allocated to said each data flow to set the maximum holding time, which corresponds to a high-priority data flow, shorter.

4. The rate control performed in a wireless base station device (10) as defined by claim 1, 2 or 3 wherein the congestion is congestion that occurs in a virtual link unit to which the data flows belong.

5. The rate control method, performed in a wireless.base station device (10) when congestion occurs in a virtual link unit (21, 22, 23) to which data flows belong, for setting rates of the data flows to a rate lower than a predetermined bandwidth as defined by claims 1, 2, 3 or 4 wherein said rate control method further comprising the steps of:

   a) calculating a data flow rate Rflow_reduced(n) using Rflow_reduced(n)=Nflow(n)/TMAX_flow where Nflow(n) is a holding amount of data that is held in a buffer in a higher-level station device (30) and that corresponds to an nth data flow, n is a natural number, and TMAX_flow is a maximum holding time allowed in the buffer;
   b) calculating a bandwidth reduction rate of the nth data flow RVL_reduced(n)=(Rflow(n)-Rflow-reduced(n))/Rvlink of the nth data flow where Rvlink is a maximum bandwidth of the virtual link (21, 22, 23); and
   c) if the bandwidth reduction rate RVL_reduced(n) is equal to or higher than a predetermined bandwidth reduction rate, sending flow control information to the higher-level station device (30) to request to set the rate of the nth data flow to Rflow_reduced(n).

6. The rate control method performed in a wireless base station device (10) as defined by claim 5 further comprising:

   executing said step (a) and said step (b) for the data flows in descending order of rates beginning with a data flow with a highest rate;
   calculating a sum of the bandwidth reduction rates RVL_reduced(n) corresponding to the data flows for which said steps are executed,
   instead of said step (c), executing said step (a) and said step (b) repeatedly until the sum becomes equal to or higher than the predetermined bandwidth reduction rate; and,
   if the sum becomes equal to or higher than the predetermined bandwidth reduction rate, sending flow control information to the higher-level station device (30) to request that the rate of each data flow, for which said step (a) and said step (b) are executed, be set to Rflow_reduced(n).

7. The rate control method performed in a wireless base station device (10) as defined by claim 5 or 6 wherein priority is allocated to the nth data flow and, instead of the maximum holding time TMAX_flow corresponding to the nth data flow, n*TMAX_flow is used where n is a coefficient representing the priority.

8. A wireless base station device (10) comprising means for connecting to a higher-level station device (30) and comprising baseband processors (11, 12, 13), one for each virtual link (21, 22, 23) to which one or more data flows belong wherein
each of said baseband processors (11, 12, 13) comprises:

   a congestion monitor (51) comprising means for monitoring a reception bandwidth usage rate of a virtual link (21, 22, 23), allocated to a cell, means for detecting congestion and, if congestion is detected, means for notifying congestion information to a flow controller (57);
   a traffic distributor (52) comprising means for distributing user traffic, received from said higher-level station device (30), to a traffic flow of each user and, at the same time, means for extracting a holding amount of a buffer in said higher-level station device (30) from each data flow and for notifying the extracted holding amount to the flow controller; and
   the flow controller (57) comprising means for managing a data flow of each user and means, responsive to the congestion information notified by said congestion monitor (51), for requesting said higher-level station device (30) to reduce rates of data flows in descending order of rates beginning with a data flow with a highest rate.

9. The wireless base station device (10) as defined by claim 8 wherein said flow controller (57) comprising means for notifying information to said higher-level station device (30), said information requesting that the rate of a data flow be reduced to a rate determined by a ratio between the holding amount and a maximum holding time allowed in the buffer.

10. The wireless base station device (10) as defined by claim 8 wherein said flow controller (57) comprising means for allocating priority to each of said data flows to set the maximum holding time corresponding to a high-priority data flow shorter.


**Patentansprüche**

1. Ratensteuerverfahren, durchgeführt in einer drahtlosen Basisstationsvorrichtung (10), wenn Überlastung in Datenflüssen von einer höheren Stationsvorrichtung (30) auftritt, zur Einstellung der Raten der Datenflüsse auf eine Rate, die niedriger als eine vorbestimmte Bandbreite ist, umfassend:

   Verwalten eines jeden der Datenflüsse und Halten von Daten in einem Puffer in einer höheren Stationsvorrichtung (30); und
   auf Basis eines Haltebetrags von Daten, die in dem Puffer gehalten werden und die einem jeden Datenfluss entsprechen, Senden einer Meldung an die höhere Stationsvorrichtung (30) zur Aufforderung, Raten in absteigender Reihenfolge von Raten beginnend mit einem Datenfluss mit einer höchsten Rate zu reduzieren; und dass Daten zu dem Haltebetrag von Daten, die in dem Puffer gehalten werden, aus dem Datenfluss extrahiert werden.

2. Ratensteuerverfahren, durchgeführt in einer drahtlosen Basisstationsvorrichtung (10), wie durch Anspruch 1 definiert, wobei die Rate eines jeden Datenflusses so reduziert wird, dass die Rate gleich einer Rate wird, die durch ein Verhältnis zwischen dem Haltebetrag und einer maximalen in dem Puffer erlaubten Haltezeit bestimmt wird.

3. Ratensteuerverfahren, durchgeführt in einer drahtlosen Basisstationsvorrichtung (10), wie durch Anspruch 2 definiert, wobei einem jeden Datenfluss eine Priorität zugewiesen wird, um die maximale Haltezeit, welche einem Datenfluss mit hoher Priorität entspricht, kürzer einzustellen.

4. Ratensteuerverfahren, durchgeführt in einer drahtlosen Basisstationsvorrichtung (10), wie durch Anspruch 1, 2 oder 3 definiert, wobei die Überlastung eine Überlastung ist, die in einer virtuellen Verbindungseinheit auftritt, zu der die Datenflüsse gehören.

5. Ratensteuerverfahren, durchgeführt in einer drahtlosen Basisstationsvorrichtung (10), wenn Überlastung in einer virtuellen Verbindungseinheit (21, 22, 23) auftritt, zu der Datenflüsse gehören, zur Einstellung der Raten der Datenflüsse auf eine Rate, die niedriger als eine vorbestimmte Bandbreite ist, wie durch die Ansprüche 1, 2, 3 oder 4 definiert, wobei das Ratensteuerverfahren weiterhin die Schritte umfasst:

   a) Berechnen einer Datenflussrate $Rflow\_reduced(n)$ mittels $Rflow\_reduced(n)=Nflow(n)TMAX\_flow$, worin Nflow(n) ein Haltebetrag von Daten ist, die in einem Puffer in einer höheren Stationsvorrichtung (30) gehalten werden und die einem n-ten Datenfluss entsprechen, n eine natürliche Zahl ist und TMAX_flow eine maximale in dem Puffer erlaubte Haltezeit ist;

b) Berechnen einer Bandbreitereduktionsrate des n-ten Datenflusses RVL_reduced(n)=(Rflow(n)-Rflow-reduced(n))/Rvlink des n-ten Datenflusses, wobei Rvlink eine maximale Bandbreite der virtuellen Verbindung (21, 22, 23) ist; und

c) wenn die Bandbreitereduktionsrate RVL_reduced(n) gleich einer vorbestimmten Bandbreitereduktionsrate oder höher ist, Senden von Flusssteuerinformationen zu der höheren Stationsvorrichtung (30) zur Anforderung, die Rate des n-ten Datenflusses auf Rflow_reduced(n) einzustellen.

6. Ratensteuerverfahren, durchgeführt in einer drahtlosen Basisstationsvorrichtung (10), wie durch Anspruch 5 definiert, weiterhin umfassend:

Durchführen des Schritts (a) und des Schritts (b) für die Datenflüsse in absteigender Reihenfolge von Raten beginnend mit einem Datenfluss mit einer höchsten Rate; Berechnen einer Summe der Bandbreitereduktionsraten RVL_reduced(n) entsprechend den Datenflüssen, für welche die Schritte durchgeführt werden, statt des Schritts (c) wiederholtes Durchführen des Schritts (a) und des Schritts (b), bis die Summe gleich der vorbestimmten Bandbreitereduktionsrate oder höher wird; und, wenn die Summe gleich der vorbestimmten Bandbreitereduktionsrate oder höher wird, Senden von Flusssteuerinformationen zu der höheren Stationsvorrichtung (30) zur Anforderung, dass die Rate eines jeden Datenflusses, für den der Schritt (a) und der Schritt (b) durchgeführt werden, auf Rflow_reduced(n) eingestellt wird.

7. Ratensteuerverfahren, durchgeführt in einer drahtlosen Basisstationsvorrichtung (10), wie durch Anspruch 5 oder 6 definiert, wobei dem n-ten Datenfluss eine Priorität zugewiesen wird und statt der maximalen Haltezeit TMAX_flow entsprechend dem n-ten Datenfluss n*TMAX_flow verwendet wird, wobei n ein Koeffizient ist, der die Priorität darstellt.

8. Drahtlose Basisstationsvorrichtung (10) mit Mitteln zur Verbindung mit einer höheren Stationsvorrichtung (30) und mit Basisband-Prozessoren (11, 12, 13), einem für jede virtuelle Verbindung (21, 22, 23), zu der ein oder mehr Datenflüsse gehören, wobei jeder der Basisband-Prozessoren (11, 12, 13) umfasst:

eine Überlastungs-Überwachungseinrichtung (51) mit Mitteln zur Überwachung einer Empfangsbandbreite-Nutzungsrate einer virtuellen Verbindung (21, 22, 23), einer Zelle zugewiesen, Mitteln zur Erkennung von Überlastung und, wenn Überlastung erkannt wird, Mittel zur Meldung von Überlastungsinformationen an eine Flusssteuereinrichtung (57);

einen Verkehrsverteiler (52) mit Mitteln zur Verteilung des von der höheren Stationsvorrichtung (30) empfangenen Benutzerverkehrs auf einen Verkehrsfluss eines jeden Benutzers und gleichzeitig Mitteln zur Extrahierung eines Haltebetrags eines Puffers in der höheren Stationsvorrichtung (30) aus jedem Datenfluss und zur Meldung des extrahierten Haltebetrags an die Flusssteuereinrichtung; und

die Flusssteuereinrichtung (57) mit Mitteln zur Verwaltung eines Datenflusses eines jeden Benutzers und Mitteln, die auf die von der Überlastungs-Überwachungseinrichtung (51) gemeldeten Überlastungsinformationen reagieren, zur Aufforderung der höheren Stationsvorrichtung (30), Raten von Datenflüssen in absteigender Reihenfolge von Raten beginnend mit einem Datenfluss mit einer höchsten Rate zu reduzieren.

9. Drahtlose Basisstationsvorrichtung (10) wie durch Anspruch 8 definiert, wobei die Flusssteuereinrichtung (57) Mittel zur Meldung von Informationen an die höhere Stationsvorrichtung (30) umfasst, welche Informationen anfordern, dass die Rate eines Datenflusses auf eine Rate reduziert wird, die durch ein Verhältnis zwischen dem Haltebetrag und einer maximalen in dem Puffer erlaubten Haltezeit bestimmt wird.

10. Drahtlose Basisstationsvorrichtung (10) wie durch Anspruch 8 definiert, wobei die Flusssteuereinrichtung (57) Mittel umfasst, einem jeden der Datenflüsse eine Priorität zuzuweisen, um die einem Datenfluss mit hoher Priorität entsprechende maximale Haltezeit kürzer einzustellen.

**Revendications**

1. Procédé pour contrôler la vitesse de transmission, exécuté dans un dispositif de station de base sans fil (10) lorsqu'un encombrement se produit dans les flux de données provenant d'un dispositif de station de niveau supérieur (30), destiné à fixer les vitesses de transmission des flux de données à une vitesse de transmission inférieure à une bande passante prédéterminée, comprenant les étapes consistant à :

gérer chacun des flux de données et stocker des données dans une mémoire tampon du dispositif de station de niveau supérieur (30) ; et,

en fonction d'une quantité de stockage des données qui sont stockées dans ladite mémoire tampon et qui correspond à chaque flux de données, envoyer une notification au dit dispositif de station de niveau supérieur (30) pour demander de réduire les vitesses de transmission dans un ordre décroissant des vitesses de transmission, en commençant par un flux de données avec une vitesse de transmission maximale ; et,

des données correspondant à la quantité de stockage des données qui sont stockées dans ladite mémoire tampon sont extraites à partir du flux de données.

2. Procédé pour contrôler la vitesse de transmission, pour une utilisation dans un dispositif de station de base sans fil (10) comme défini par la revendication 1, dans lequel la vitesse de transmission dudit chaque flux de données est réduite afin que la vitesse de transmission devienne égale à une vitesse de transmission déterminée par un rapport entre la quantité de stockage et une durée de stockage maximale autorisée dans ladite mémoire tampon.

3. Procédé pour contrôler la vitesse de transmission, pour une utilisation dans un dispositif de station de base sans fil (10) comme défini par la revendication 2, dans lequel une priorité est allouée au dit chaque flux de données pour réduire la durée de stockage maximale, qui correspond à un flux de données de priorité élevée.

4. Procédé pour contrôler la vitesse de transmission, pour une utilisation dans un dispositif de station de base sans fil (10) comme défini par la revendication 1, 2 ou 3, dans lequel l'encombrement est un encombrement qui a lieu dans une unité de liaison virtuelle à laquelle les flux de données appartiennent.

5. Procédé pour contrôler la vitesse de transmission, exécuté dans un dispositif de station de base sans fil (10) lorsqu'un encombrement a lieu dans une unité de liaison virtuelle (21, 22, 23) à laquelle les flux de données appartiennent, destiné à fixer les vitesses de transmission des flux de données à une vitesse de transmission inférieure à une bande passante prédéterminée, comme défini par les revendications 1, 2, 3 ou 4, dans lequel ledit procédé de contrôle de la vitesse de transmission comprend en outre les étapes consistant à :

a) calculer une vitesse de transmission de flux de données $Rflow\_reduced(n)$ en utilisant $Rflow\_reduced(n) = Nflow(n)/TMAX\_flow$ où $Nflow(n)$ est une quantité de stockage des données qui sont stockées dans une mémoire tampon d'un dispositif de station de niveau supérieur (30) et qui correspond à nième flux de données, n est un nombre naturel, et $TMAX\_flow$ est une durée de stockage maximale autorisée dans la mémoire tampon ;

b) calculer un taux de réduction de bande passante du nième flux de données $RVL\_reduced(n) = (Rflow(n)-Rflow-reduced(n))/Rvlink$ du nième flux de données où $Rvlink$ est une bande passante maximale de la liaison virtuelle (21, 22, 23) ; et

c) si le taux de réduction de bande passante $RVL\_reduced(n)$ est égal ou supérieur à un taux de réduction de bande passante prédéterminé, envoyer des informations de contrôle de flux au dispositif de station de niveau supérieur (30) pour demander de fixer la vitesse de transmission du nième flux de données à $Rflow\_reduced(n)$.

6. Procédé pour contrôler la vitesse de transmission, pour une utilisation dans un dispositif de station de base sans fil (10) comme défini par la revendication 5, comprenant en outre les étapes consistant à :

exécuter ladite étape a) et ladite étape b) pour les flux de données dans un ordre décroissant des vitesses de transmission, en commençant par un flux de données avec une vitesse de transmission maximale ;

calculer une somme des taux de réduction de bande passante $RVL\_reduced(n)$ correspondant aux flux de données pour lesquels lesdites étapes sont exécutées,

au lieu de ladite étape c), exécuter ladite étape a) et ladite étape b) de façon répétée jusqu'à ce que la somme devienne égale ou supérieure au taux de réduction de bande passante prédéterminé ; et

si la somme devient égale ou supérieure au taux de réduction de bande passante prédéterminé, envoyer des informations de contrôle de flux au dispositif de station de niveau supérieur (30) pour demander que la vitesse de transmission de chaque flux de données, pour lesquels ladite étape a) et ladite étape b) sont exécutées, soit fixée à $Rflow\_reduced(n)$.

7. Procédé pour contrôler la vitesse de transmission, pour une utilisation dans un dispositif de station de base sans fil (10) comme défini par la revendication 5 ou 6, dans lequel une priorité est allouée au nième flux de données et, au lieu de la durée de stockage maximale TMAX_flow correspondant au nième flux de données, n*TMAX_flow est utilisé où n est un coefficient représentant la priorité.

8. Dispositif de station de base sans fil (10) comprenant des moyens de connexion à un dispositif de station de niveau supérieur (30) et comprenant des processeurs en bande de base (11, 12, 13), un pour chaque liaison virtuelle (21, 22, 23) à laquelle un ou plusieurs flux de données appartiennent, dans lequel chacun desdits processeurs en bande de base (11, 12, 13) comprend :

un moniteur d'encombrement (51) comprenant des moyens destinés à surveiller un taux d'usage de bande passante de réception d'une liaison virtuelle (21, 22, 23) alloué à une cellule, des moyens de détection d'encombrement et, si un encombrement est détecté, des moyens destinés à notifier des informations d'encombrement à un contrôleur de flux (57) ;
un distributeur de trafic (52) comprenant des moyens destinés à distribuer un trafic utilisateur, reçu à partir dudit dispositif de station de niveau supérieur (30), vers un flux de trafic de chaque utilisateur et, en même temps, des moyens destinés à extraire une quantité de stockage d'une mémoire tampon dudit dispositif de station de niveau supérieur (30) à partir de chaque flux de données et à notifier la quantité de stockage extraite au contrôleur de flux ; et
le contrôleur de flux (57) comprenant des moyens destinés à gérer un flux de données de chaque utilisateur et des moyens réagissant aux informations d'encombrement notifiées par ledit moniteur d'encombrement (51) destinés à demander au dit dispositif de station de niveau supérieur (30) de réduire les vitesses de transmission dans un ordre décroissant des vitesses de transmission, en commençant par un flux de données avec une vitesse de transmission maximale.

9. Dispositif de station de base sans fil (10) comme défini par la revendication 8, dans lequel ledit contrôleur de flux (57) comprend des moyens destinés à notifier des informations au dit dispositif de station de niveau supérieur (30), lesdites informations demandant que la vitesse de transmission d'un flux de données soit réduite à une vitesse de transmission déterminée par un rapport entre la quantité de stockage et une durée de stockage maximale autorisée dans la mémoire tampon.

10. Dispositif de station de base sans fil (10) comme défini par la revendication 8, dans lequel ledit contrôleur de flux (57) comprend des moyens destinés à allouer une priorité à chacun desdits flux de données pour réduire la durée de stockage maximale correspondant à un flux de données de priorité élevée.

# FIG . 1

20 : WIRED LINE    23

# FIG . 2

11

51    52 : USER TRAFFIC DISTRIBUTOR    53

21    SCHEDULER

CONGESTION MONITOR

54

61    62

63    57

SPREAD-SPECTRUM
ENCODER    55

14

FLOW CONTROLLER    56

MODULATOR

# FIG . 3

START

**S11**
CONGESTION DETECTED? — N

↓ Y

**S12**
j=1, S=0

**S13**
DETECT KJ-TH DATA FLOW WITH HIGHEST RATE

**S14**
CALCULATE AMOUNT OF KJ-TH DATA FLOW AND BUFFER HOLDING AMOUNT

**S15**
CALCULATE KJ-TH USER FLOW RATE SATISFYING MAXIMUM HOLDING TIME AND BANDWIDTH REDUCTION RATE. CALCULATE SUM OF BANDWIDTH REDUCTION RATES OF USERS

**S16**
SUM OF BANDWIDTH REDUCTION RATES EQUAL TO OR HIGHER THAN BANDWIDTH REDUCTION RATE Y? — N

**S17**
j=j+1

**S18**
DETECT KJ-TH DATA FLOW WITH NEXT HIGHEST RATE

↓ Y

**S19**
SEND FLOW CONTROL INFORMATION

END

# FIG . 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P2000316035 A
- JP P200257707 A
- EP 1331768 A1
- US 20040193719 A1